Europäisches Patentamt

(19) European Patent Office

Office européen des brevets

(11) Publication number: **0 125 340**
**B1**

# (12) EUROPEAN PATENT SPECIFICATION

(45) Date of publication of patent specification: **07.01.88**

(21) Application number: **83110396.5**

(22) Date of filing: **19.10.83**

(51) Int. Cl.⁴: **G 01 N 21/47**, G 01 N 21/55

(54) **Apparatus for measuring nonspecular reflected light.**

(30) Priority: **01.11.82 US 438010**

(43) Date of publication of application:
**21.11.84 Bulletin 84/47**

(45) Publication of the grant of the patent:
**07.01.88 Bulletin 88/01**

(84) Designated Contracting States:
**DE FR GB IT SE**

(56) References cited:
**EP-A-0 032 774**
**DE-A-2 038 603**
**US-A-3 718 399**

**PATENT ABSTRACTS OF JAPAN vol. 5, no. 134,
26th August 1981, page (P-77) (806)**

(73) Proprietor: **MILES LABORATORIES, INC.**
**1127 Myrtle Street**
**Elkhart Indiana 46514 (US)**

(72) Inventor: **Brunsting, Albert**
**51718 Northfield Drive**
**Elkhart Indiana 46514 (US)**
Inventor: **Hernicz, Ralph S.**
**54427 Faye Drive**
**Osceola Indiana 46561 (US)**
Inventor: **Pugh, Jerry T.**
**3101 Crabtree Lane**
**Elkhart Indiana 46514 (US)**

(74) Representative: **Jesse, Ralf-Rüdiger, Dr. et al**
**Bayer AG Konzernverwaltung RP**
**Patentabteilung**
**D-5090 Leverkusen 1 Bayerwerk (DE)**

Courier Press, Leamington Spa, England.

## Description

### Background of the invention
### Field of the invention

The present invention relates to an apparatus for measuring the reflectance of a flat surface of a specimen, comprising at least a light source, means for supporting the specimen and at least one means for detecting nonspecular light reflected from the surface of the specimen. In particular, the invention is directed to an optical readhead for illuminating a test device and measuring the nonspecular reflected light.

### Description of the prior art

The art of analytical chemistry has been greatly advanced since biochemistry began emerging as a primary scientific frontier, requiring increasingly sophisticated analytical methods and tools to solve problems, the solutions to which were never before attempted. Likewise, the medical profession has lent impetus to the growth of analytical chemistry, with its desiderata of both high precision and speed in obtaining results. This remarkable progress has been still further spurred by industries such as brewing, chemical manufacturing and others.

To satisfy the needs of these expanding technologies a myriad of analytical procedures, compositions and apparatuses have evolved, including solution chemistry techniques, automated machinery and the so called "dip-and-read" type reagent strips.

Reagent strip test devices enjoy wide use in many analytical applications, especially in the chemical analysis of biological fluids, because of their relatively low cost, ease of usability, and speed in obtaining results. In medicine, for example, numerous physiological functions can be monitored merely by dipping reagent test devices into a sample of body fluid, such as urine or blood, and observing a detectable response such as change in color or change in the amount of light reflected from or absorbed by the test device. Many of these test devices produce a detectable response which is at least semiquantitative, if not quantitative. Thus, by measuring the response after a predetermined time, the analyst can obtain not only a positive indication of the presence of a particular constituent in a test sample, but also an estimate of how much of the constituent is present. Such test devices provide the physician with a facile diagnostic tool as well as the ability of gauge the extent of disease or bodily malfunction.

Illustrative of such test devices currently in use are products available from the Ames Division of Miles Laboratories, Inc., under the trandemarks Clinistix®, Multistix®, Diastix®, Dextrostix®, and others Test devices such as these usually comprise one or more carrier matrices, such as an absorbent paper having incorporated therewith a particular reagent or reactive system which manifests a color change in the presence of a specific sample component. Depending on the reactant system incorporated with a particular matrix, these devices can detect the presence of glucose, ketone bodies, bilirubin, urobilinogen, occult blood, nitrite, and other substances. The specific color change and the intensity of the color observed within a specific time range after contacting the test device with sample is indicative of the presence of a particular component and its concentration in the sample. Some of these test devices and their reactant systems are set forth in U.S. Patent Nos. 3,123,443 (Clinistix®); 3,212,855 (Ketostix®); 3,184,668; 3,164,534 and 2,981,606 (Diastix®); and 3,298,789; 3,092,465; 3,164,534 and 2,981,606 (Dextrostix®).

The development of automated instruments which eliminate the need for manual manipulation of the chemical reactants and which give programmed readouts have greatly facilitated the use of such test devices by improving the reproducibility of the tests by substantially eliminating subjectivity of the user as a factor in obtaining a reliable measurement. Various reflectance meters have been employed which use a light source and photoelectric cell or sensing means to determine color values by measuring the amount of light reflected from a colored surface illuminated by the reference light source. In order, however, to obtain reliable readings it has been necessary to position the light source and the sensing means in such a fashion as to minimize the effects of specular reflection, which occurs at the surface of the test device being measured.

In order to minimize adverse effects of specular reflection, e.g., effects dependent upon the topography of a sample and/or the color temperature of the light source, instruments designed to measure diffuse reflectance have resorted to illumination of the specimen at an angle normal to the specimen and the collection of reflected light at an angle 45 degrees to normal, as in U.S. Patent Nos. 3,604,815 and 3,907,503. Obviously, this configuration can be reversed with illumination being at an angle 45 degrees to normal. Such configurations have required rather complicated arrangements of components and even the use of fiber optics to conveniently transmit light to a desired location. Others have proposed the use of multiple light sources positioned at an angle of 45 degrees to normal and collecting reflected light normal to the specimen, as in U.S. Patent No. 4,279,514. The aforementioned geometrics have been considered most important in making reflection measurements. See, for example, the International Commision on Illumination's publication CIE No. 44(TC-2.3) 1979 entitled "Absolute Methods for Reflection Measurements".

Another solution to avoid the drawback of specular reflection is disclosed in U.S. Patent No. 3,718,399. The reflectance sensor, which is described herein, comprises a light source, a detector element and a light baffle structure. The light source, the detector and the baffle are arranged in such a manner that the directly reflected light is blocked from the detector, i.e. the detector sees only scattered light. Without the baffle structure, the detector would receive specular reflected light from the specimen to be tested. The configuration and alignment of the baffle structure is thus critical.

The present invention is particularly directed to construction of an optical readhead system for illuminating a reagent pad and obtaining the measurement on nonspecular reflected light which provides not only a more convenient method of mounting the light source and detector, but also provides significant advantages over other methods, especially where cost and size are important considerations for such instrumentation.

Summary of the invention

An apparatus for measuring the reflectance of a flat surface of a specimen is disclosed, comprising at least a light source, means for supporting the specimen and at least one means for detecting nonspecular light reflected from the surface of the specimen, the said at least one light source and the said at least one detecting means being mounted on a common plane, wherein according to the invention said at least one light source and said at least one detecting means are mounted in close proximity to each other, the light transmission axis of the light source and the light reception axis of the detecting means are substantially parallel to one another and form with the normal to the specimen surface an angle φ greater then 0 degrees and less than 90 degrees. Angle φ is selected such that the specular reflection at the surface of the specimen is insignificant compared to the minimum diffuse reflection expected from the unknown specimen. Preferably, φ is between 10 degrees and 60 degrees and even more preferably between 15 degrees and 40 degrees.

Brief description of the drawings

Other and further advantages and features of the invention will be apparent to those skilled in the art from the following detailed description thereof, taken in conjunction with the accompanying drawings, in which:

Fig. 1 is a partial top view of a prior art reflectance device in which the detector is located normal to the specimen holder; and

Fig. 2 is a schematic side view of apparatus in accordance with the present invention.

Description of the preferred embodiments

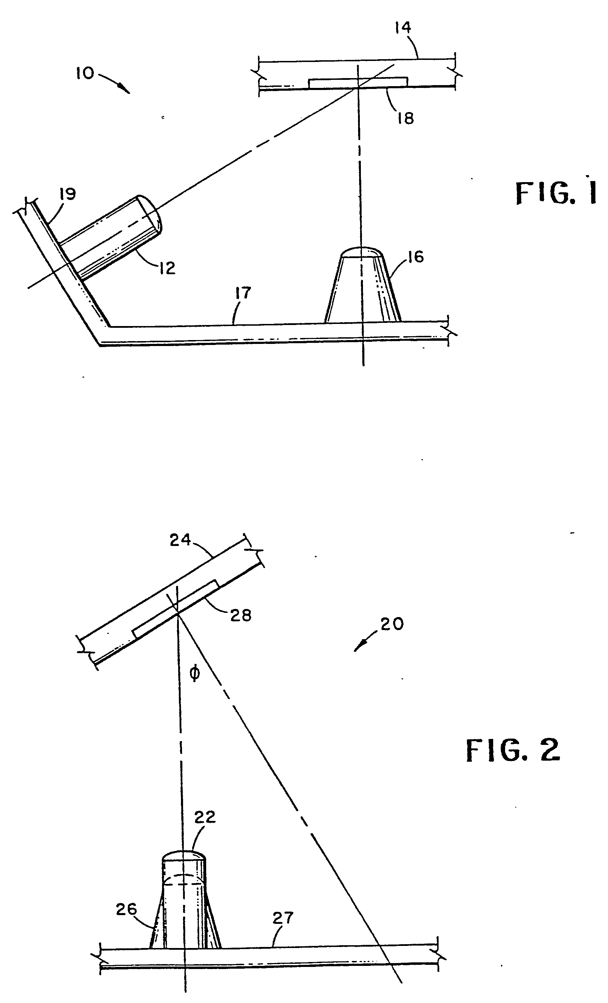

Fig. 1 of the drawings illustrates a typical prior art apparatus 10 for the measurement of reflectance. This apparatus includes a light source 12, a specimen holder 14, and reflected light detector 16. The axis of light source 12 is positioned at an angle 45 degrees to the normal of specimen holder 14 and detector 16 is positioned normal to the surface of specimen holder 14. Accordingly, reflectance from specimen 18 held by specimen holder 14 can be measured by illuminating the specimen using light source 12 and measuring the nonspecular reflected light using detector 16.

Prior art apparatus such as that illustrated in Fig. 1 is well known in the art and many modifications and variations of such apparatus have been devised. However, all known reflectance devices are constructed such that either the light source or the detector is positioned at an angle normal to the surface of the specimen holder. This fact necessitates that light source 12 be mounted on surface 19 while detector 16 is mounted on surface 17. This has been considered to be essential in order to avoid specular reflection and thereby obtain the measurement of only nonspecular reflected light from a test device or specimen mounted in the holder.

Fig. 2 is a schematic illustration of apparatus in accordance with the present invention in which reflectance device 20 consists of light source 22, specimen holder 24 and detector 26. Both light source 22 and detector 26 are mounted on the same support 27 in close proximity to each other. Specimen holder 24 is positioned at an angle (φ) from the normal to the surface of the specimen holder of the test device. Accordingly, when specimen 28 is placed on the surface of specimen holder 24 detector 26 can be used to obtain the measurement of nonspecular reflected light from light source 22.

The nature of the light source and detector empolyed are not critical. One preferred light source is light emitting diode (LED) module HLMP-3950 made by Hewlett Packard of Palo Alto, California. A preferred detector is photoelectric cell SD-041-11-11-011 (Isolated)-211 made by Silicon Detector Corp. of Newbury Park, California.

The embodiment illustrated in Fig. 2 thus accomplishes the same objective as the prior art embodiment illustrated in Fig. 1. However, unlike prior art embodiments, the light source and detector in Fig. 2 can be mounted substantially parallel on the same support. Not only does this reduce the cost of the overall apparatus, requiring a less expensive surface and construction for the mounting board utilized, but it also facilitates miniaturization of the reflectance apparatus. This feature is especially important in view of the increasing use of printed circuit (PC) boards to mount components for reflectance apparatus. The use of PC boards and the direct mounting of the light source(s) and detector(s) directly to the PC boards provide a very convenient, inexpensive, quick and secure mounting for such components.

The arrangement of the components in accordance with Fig. 2 also represents a distinct advantage over prior art arrangements in that the proposed arrangement helps to overcome height sensitivity problems associated with prior art devices. In addition, since the lead lengths of the detector can be made much shorter the electrical noise is reduced. Moreover, problems associated with blemishes in or on the sample holder window or cover, which can result or cause stray light (i.e., optical noise), are minimized or reduced in the apparatus of the present invention.

As indicated above, the angle φ is preferably

between 10 and 60 degrees. Even more preferably φ is between 15 and 40 degrees. This angle is dependent in part on the area of the specimen, the amount of diffuse light being reflected as signal, and the specular light reflected as "noise". As the area of the specimen decreases, the detected signal becomes more sensitive to surface heterogeneites in the specimen. As the angle is increased the relative amount of diffuse (compared to specular) reflectance is increased. The diffuse light transmits the desired information about the specimen, whereas the specular light transmits undesired information about the topography of the surface of the specimen, the light source color temperature, etc.

From the foregoing, it will be seen that this invention is well adapted to attain all of the ends and objects hereinabove set forth, together with other advantages which are obviuos and which are inherent to the system. The apparatus of the present invention has the advantages of convenience, simplicity, relative inexpensiveness, positiveness, effectiveness, durability and accuracy.

It should be understood that many variations within the skill of those in the art can be made, including the use of multiple light sources, multiple detectors, light sources differing in transmitted wave length, the use of filters to limit the light source transmitted or the reflected light detected, the use of high intensity pulsed light sources as well as incandescent light sources and the use of lenses to focus the light.

## Claims

1. Apparatus for measuring the reflectance of a flat surface of a specimen, comprising at least a light souce, means for supporting the specimen and at least one means for detecting nonspecular light reflected from the surface of the specimen, the said at least one light source and the said at least one detecting means being mounted on a common plane, characterized in that the at least one light source (22) and the at least one detecting means (26) are mounted in close proximity to each other and in that the light transmission axis of the light source (22) and the light reception axis of the detecting means (26) are substantially parallel to one another and form with the normal to the specimen (28) surface an angle φ greater than 0 degrees and less than 90 degrees.

2. Apparatus of Claim 1, in which two light sources are employed.

3. Apparatus of Claim 2, in which the light sources (22) are capable of emitting light of different frequencies.

4. The apparatus of Claim 1, in which angle φ is between 10 degrees and 60 degrees.

5. The apparatus of Claim 1, in which angle φ is between 15 degrees and 40 degrees.

## Patentansprüche

1. Vorrichtung zum Messen des Reflexionsvermögens einer flachen Oberfläche einer Probe mit wenigstens einer Lichtquelle, einer Probenhalterung und einer Einrichtung zum Nachweis des an der Oberfläche der Probe reflektierten, nicht-spiegelnden Lichtes, wobei die Lichtquelle(n) und die Nachweiseinrichtung(en) auf einer gemeinsamen Ebene angeordnet sind, dadurch gekennzeichnet, daß die Lichtquelle(n) (22) und die Nachweiseinrichtung(en) (26) in enger Nachbarschaft zueinander angebracht sind und daß die optische Achse der Lichtquelle (22) und die optische Achse der Nachweiseinrichtung (26) im wesentlichen parallel zueinander sind und mit der Normalen zu der Proben-Oberfläche (28) einen Winkel φ von mehr als 0° und weniger als 90° bilden.

2. Vorrichtung gemäß Anspruch 1, dadurch gekennzeichnet, daß zwei Lichtquellen vorgesehen sind.

3. Vorrichtung gemäß Anspruch 2, dadurch gekennzeichnet, daß die Lichtquellen (22) in der Lage sind, Licht unterschiedlicher Frequenzen zu emittieren.

4. Vorrichtung gemäß Anspruch 1, dadurch gekennzeichnet, daß der Winkel φ 10° bis 60° beträgt.

5. Vorrichtung gemäß Anspruch 1, dadurch gekennzeichnet, daß der Winkel φ 15° bis 40° beträgt.

## Revendications

1. Dispositif pour mesurer le pouvoir réflecteur d'une surface plane d'un échantillon, comprenant au moins une source lumineuse, un moyen pour supporter l'échantillon et au moins un moyen pour détecter la lumière non spéculaire réfléchie par la surface de l'échantillon, ladite source lumineuse au moins et ledit moyen de détection au moins étant montés sur un plan commun, caractérisé en ce que ladite source lumineuse (22) au moins et ledit moyen de détection (26) au moins sont montés très près l'un de l'autre et en ce que l'axe d'émission de lumière de la source lumineuse (22) et l'axe de réception de lumière du moyen de détection (26) sont essentiellement parallèles entre eux et forment avec la normale de la surface de l'échantillon (28) an angle φ supérieur à 0 degré et inférieur à 90 degrés.

2. Dispositif selon la revendication 1, dans lequel deux sources lumineuses sont utilisées.

3. Dispositif selon la revendication 2, dans lequel les sources lumineuses (22) sont capables d'émettre de la lumière de fréquences différentes.

4. Dispositif selon la revendication 1, dans lequel l'angle φ est compris entre 10 degrés et 60 degrés.

5. Dispositif selon la revendication 1, dans lequel l'angle φ est compris entre 15 degrés et 40 degrés.

0 125 340

FIG. 1

FIG. 2

1